# EUROPEAN PATENT SPECIFICATION

(11) **EP 3 869 033 B1**
(45) Date of publication and mention of the grant of the patent: **19.07.2023**
(21) Application number: 20380008.1
(22) Date of filing: 20.02.2020
(51) Int. Cl.: F03D 7/02, F03D 15/00, F03D 80/50

(54) **LOCKING SYSTEM FOR LOCKING THE MAIN SHAFT OF A WIND TURBINE AND WIND TURBINE**
VERRIEGELUNGSSYSTEM ZUM VERRIEGELN DER HAUPTWELLE EINER WINDTURBINE UND WINDTURBINE
SYSTÈME DE VERROUILLAGE POUR VERROUILLER L'ARBRE PRINCIPAL D'UNE ÉOLIENNE ET ÉOLIENNE

(43) Date of publication of application: 25.08.2021
(73) Proprietor: SIEMENS GAMESA RENEWABLE ENERGY INNOVATION & TECHNOLOGY, S.L., 31621 Sarriguren (Navarra) (ES)
(72) Inventor: Redin Miqueleiz, Juan, San Jose, 95124 (US)
(74) Representative: SGRE-Association

(56) References cited:
- EP-A1- 2 759 700
- EP-A2- 1 748 182
- DE-A1-102018 004 464
- GB-A- 337 444
- US-A1- 2019 345 914

## Description

The present invention is directed to a locking system for locking the main shaft of a wind turbine, the locking system comprising the main shaft and a flange arranged on the main shaft, whereby a hub end of the main shaft is configured to connect to a hub of the wind turbine and the hub is configured to have at least two wind turbine blades attached to the hub. Further, the invention is directed to a wind turbine.

For serviceability reasons it is necessary that the hub of a wind turbine can be secured against unintentional rotation. This can be done by a locking system comprising a locking disc attached to the main shaft, the main shaft being connected to the hub. The locking disc is provided with radially arranged bores, into which a locking pin can be inserted to lock the disc in place, thereby locking the main shaft and the thereto attached hub. Typically, the locking pin is movably mounted on a guide part, the guide part being attached to a component of the wind turbine different from the locking disc or another part connected to the shaft.

EP 2381092 A2 relates to a rotor lock assembly for use in a wind turbine blade corresponding to the above system. A disadvantage of such a locking system is that the locking pin cannot be inserted into a bore of the locking disc without lash. Thereby, forces harmful to the wind turbine and its parts, such as a bearing housing of the main shaft, are forced to act on the parts of the wind turbine. For example, when the locking pin is inserted into the bore, an intrinsic radial force is transmitted to the wind turbine and an expulsion force is generated as a tangential force. Moreover, the locking system comprising the guide part may cut access to the hub and can thereby make the servicing of the wind turbine more difficult. Further, the guide part can interfere with a nacelle of the wind turbine, thereby limiting the design of the locking system or requiring a larger nacelle.

CN 105386941 A relates to a wind turbine rotor locking system comprising multiple locking devices arranged with a set of locking teeth on opposite sides of the locking devices. The sets of locking teeth are configured to interlock with corresponding recesses provided on a circumference of a main frame of the wind turbine and a circumference of a reinforcing plate of a hub of the wind turbine. This locking system comprises a lot of parts and is very complex making it cost-inefficient and very susceptible to wear, thus it requires a lot of maintenance.

US 2019/345914 and DE 10 2018 004464 describe both known locking systems for locking a main shaft of a wind turbine.

Therefore, there is still a need for a locking system for locking the main shaft of a wind turbine which is simple, compact and cost-efficient, requires little maintenance and has a low cost of actuation.

This objective is solved by the subject-matters of the claims, in particular by a locking system with the features according to independent claim 1 and a wind turbine with the features according to independent claim 10. Further details of the invention unfold from the other claims as well as the description and the drawings. Thereby, the features and details described in connection with the locking system of the invention apply in connection with the wind turbine according to the invention and the other way around, so that regarding the disclosure of the individual aspects of the invention it is or can be referred to one another.

According to a first aspect of the invention, the problem is solved by a locking system for locking the main shaft of a wind turbine, the locking system comprising the main shaft and a flange arranged on the main shaft, whereby a hub end of the main shaft is configured to connect to a hub of the wind turbine, the hub being configured to have at least two wind turbine blades attached to the hub, whereby the flange comprises at least two plane sides arranged parallel to each other on an outer circumference of the flange and the locking system further comprises a clamping device having two clamping jaws, whereby the clamping jaws are configured to clamp the flange in between the clamping jaws by contacting the two parallel plane sides of the flange. Thereby, a simple, yet compact and cost-efficient locking system is provided. The locking system according to the invention requires only little maintenance and has a low cost of actuation.

In particular, the flange is a rim that is arranged on the main shaft. The flange may have a diameter corresponding to, in particular being equal to, a diameter of the main shaft at and/or next to a location of the flange's arrangement on the main shaft. The flange may alternatively have a larger or smaller diameter at the location of the flange's arrangement on the main shaft relative to the diameter of the main shaft at a location next to the flange. Preferably, the flange is arranged proximate to the hub end of the main shaft, in particular within a distance of two meters, preferably one meter from the hub end. Moreover preferably, the flange is arranged at the hub end of the main shaft. More preferably, the flange is forming the hub end of the main shaft. The flange may be a separate part attached to the main shaft or be formed integrally with the main shaft. The flange may comprise multiple through holes for attaching the flange by means of multiple screws to the hub. The through holes and/or the hub may comprise threads for the screws.

The plane sides may have a rectangular shape or a substantially rectangular shape, for example. A substantially rectangular shape is a shape that is rectangular for the most part but may have rounded corners, for example. On the outer circumference of the flange there may be arranged further sides like curved sides. However, it is particularly preferred that the flange is arranged with plane sides on its outer circumference only. In particular, the flange may have four, six, eight, ten or more plane sides arranged on its outer circumference. Preferably, surface areas and/or the shapes of each of the plane sides are equal to one another.

The clamping jaws are in particular engaging the two parallel plane sides of the flange by means of a force acting on the clamping jaws. The clamping jaws comprise contacting surfaces for contacting, in particular engaging, the plane sides of the flange. In particular, the clamping jaws are arranged to surround the flange. The contacting surfaces may have a rectangular shape or a substantially rectangular shape, for example. The surface areas of the clamping jaws may be equal to or in the range of 70% to 130% of the surface area of the plane sides. Particularly, the contacting surfaces of the clamping jaws are arranged parallel to one another. It is possible, that the clamping device comprises more than two clamping jaws, in particular three, four or more clamping jaws.

In a preferred embodiment of the invention, the flange comprises at least twelve plane sides arranged on the outer circumference of the flange, whereby each of the plane side has a parallel plane side. It is particularly preferred, that the flange comprises exactly twelve plane sides arranged on the outer circumference of the flange. Thereby, relevant maintenance positions of the wind turbine blades can easily be locked while still providing enough surface area on each plane side for securely locking the main shaft and keeping wear of the plane sides, i.e. the flange, and the clamping jaws low.

In a further preferred embodiment of the invention, at least one clamping plate made from hardened material is attached to at least one of the plane sides of the flange. The hardened material may be a hardened steel, for example. In particular, the hardened material of the clamping plate has a higher hardness than a material of the flange. Preferably, a clamping plate is attached to every plane side of the flange. In particular, the clamping plate has a surface area and/or shape corresponding to the surface area and/or shape of the plane side and/or corresponding to the surface area and/or shape of the contacting surfaces of the clamping jaws. Corresponding means that it may be equal or substantially equal with a deviation in surface area of up to 30% or minor deviation in shape such as a radius of rounded corners. Thereby, the maintenance frequency of the locking system is reduced and replacement of the main shaft due to unacceptable wear or damage can be avoided.

Preferably, at least one of the at least one clamping plate is reversibly attached to the at least one plane side of the flange. In particular, all clamping plates are reversibly attached to the plane sides of the flange. Reversibly attached means that the clamping plate may be detached from the plane in a non-destructive manner. For example, the clamping plate may be force-locked to the plane side of the flange. In particular, the clamping plate can be reversibly attached to the plane side of the flange by means of at least one screw. The clamping plate may comprise at least one through hole, which may be threaded. The flange may comprise at least one threaded hole arranged on each plane side of the flange, the threaded holes having an opening on the plane sides for receiving the screw. By reversibly attaching the clamping plate to the plane side of the flange, the clamping plate can easily be replaced when it is worn-out due to the high clamping forces applied onto them by means of the clamping jaws. Thereby, the maintenance frequency of the locking system is further reduced. Alternatively, the at least one clamping plate may be permanently attached to the at least one of the plane sides of the flange.

In a further preferred embodiment of the invention, the contacting surfaces of the clamping jaws, which are configured to contact the plane sides of the flange, are provided with hardened material. In particular, the clamping jaws are configured to engage the plane sides of the flange. The hardened material may be a hardened steel, for example. The clamping jaws may be entirely made from the hardened material. The hardened material may be the same as the hardened material of the clamping plates or may have substantially the same hardness. Thereby, the maintenance frequency of the locking system is further reduced.

In yet another preferred embodiment of the invention, each of the clamping jaws is driven by at least one piston, in particular by two pistons. The pistons may comprise screws or be screws. The screws may be screwed into bore holes arranged in the clamping jaws.

Preferably, at least one of the pistons is driven by a mechanical drive system. Thereby, a secure actuation of the clamping jaws is provided. A holding system may be attached to the piston or the mechanical drive system so that the piston can be locked in position. In particular, all pistons of a clamping jaw or all pistons of the clamping device may be driven by mechanical drive systems, in particular by a single mechanical drive system. The mechanical drive system may be connected to a control unit for controlling the actuation of the piston. Thereby, simultaneous contacting of the flange by the clamping jaws can be achieved. Alternatively, it is possible that at least one of the pistons is driven by a hydraulic drive system.

In a preferred embodiment of the invention, each of the clamping jaws is housed in a clamping jaw housing and the clamping jaw housings are connected to each other by means of a bridge. In particular, the bridge is a supporting structure connecting the two clamping jaw housings. The bridge prevents the clamping jaw housings and thereby the clamping jaws from moving apart from one another over a threshold of distance between the clamping jaws defined by the length and rigidity of the bridge. The bridge may be rigid. The bridge may be a tensioned wire or a beam.

In a further preferred embodiment of the invention, the clamping device is configured to be attached to a main frame of the wind turbine. The main frame of the wind turbine is a frame to which a bearing housing, a clamping unit, a gearbox and/or a generator are attached. The clamping device, in particular the clamping jaw housings, may comprise at least one connection means for attachment to the main frame. The at least one connection means may be a threaded hole, for example. Thereby, the clamping device is attached to a large none-moveable structure and can be configured to apply high forces to the flange without a risk of failure.

According to a second aspect of the invention, there is a wind turbine comprising a locking system according to the invention. The wind turbine may comprise a main bearing attached to the main shaft, whereby the main bearing is housed in a main bearing housing. The main bearing may be attached to the main shaft proximate to the hub end of the main shaft. Moreover, a gearbox may be arranged between the main shaft and a generator of the wind turbine. The gearbox may increase the rotational speed of the wind turbine blades to a higher rotational speed of the generator. The main shaft may be coupled to the gearbox by means of a clamping unit. The wind turbine may further be a wind turbine with a direct drive, i.e. without a gearbox. The main shaft, the main bearing, the gearbox, the clamping unit and/or the generator may be enclosed by a nacelle of the wind turbine. The nacelle of the wind turbine according to the invention can be designed with a high degree of design freedom because the locking system is not limiting the assembly space of the nacelle.

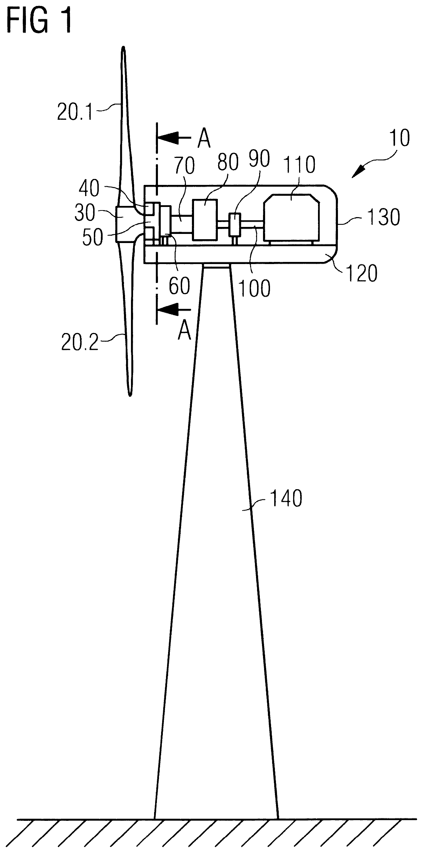

Further advantages, features and details of the invention unfold from the following description, in which by reference to drawings Fig. 1 to 3 embodiments of the present invention are described in detail. Thereby, the features from the claims as well as the features mentioned in the description can be essential for the invention as taken alone or in an arbitrary combination. In the drawings, there is schematically shown:
- Fig. 1: a view on an embodiment of the wind turbine according to the invention,
- Fig. 2: a sectional view along a transversal plane of an embodiment of a locking system according to the invention, in which the main shaft is unlocked, and
- Fig. 3: the locking system of Fig. 2, in which the main shaft is locked.

Same objects in Fig. 1 to 3 are denominated with the same reference number. If there is more than one object of the same kind in one of the figures, the objects are numbered in ascending order with the ascending number of the object being separated from its reference number by a dot.

Fig. 1 is a side view on an embodiment of the wind turbine 10 according to the invention. A nacelle 130 attached to a mast 140 of the wind turbine 10 is illustrated open from the side perspective of Fig. 1, so that the parts of the wind turbine 10 located in the nacelle 130 are visible. The wind turbine 10 is provided with a hub 30, to which two wind turbine blades 20.1, 20.2 are attached. Of course, the hub 30 may be configured to have more than just two wind turbine blades 20, for example three wind turbine blades 20, attached to the hub 30. The hub 30 is connected to a main shaft 70 of the wind turbine 10, which is connected by means of a gearbox 80 to a generator shaft 100, which in turn is connected to a generator 110. A brake 90 for slowing down the rotation of the generator shaft 100 and thus the rotation of the main shaft 70 and the hub 30 is attached to the generator shaft 100 in between the gearbox 80 and the generator 110.

A flange 40 is attached to the main shaft 70 at a hub end of the main shaft 70. In this particular embodiment, the flange 40 is integrally formed with the main shaft 70. However, this must not be the case. The flange 40 may be located anywhere at the main shaft 70 and be attached to the main shaft 70 by form-fitting or force-fitting, for example. In this particular embodiment, the flange 40 is attached to the hub 30 and thereby secures the hub 30 to the main shaft 70, so that a rotation of the wind turbine blades 20.1, 20.2 translates into rotation of the hub 30 and thereby into rotation of the flange 40 and the main shaft 70. A clamping device 50 is arranged to surround the flange 40. A main bearing 60 is arranged adjacent to the flange 40 in a direction from the hub 30 to the generator 110. The flange 40 together with the surrounding clamping device 50 may additionally or alternatively be arranged on the main shaft 70 in between the main bearing 60 and the gearbox 80.

As can be seen from Fig. 1, the clamping device 50, the main bearing 60, i.e. a main bearing housing of the main bearing 60, the gearbox 80, the brake 90 and/or the generator 110 may be attached to a main frame 120. The main frame 120 may be attached to the nacelle 130 and/or the mast 140 of the wind turbine 10.

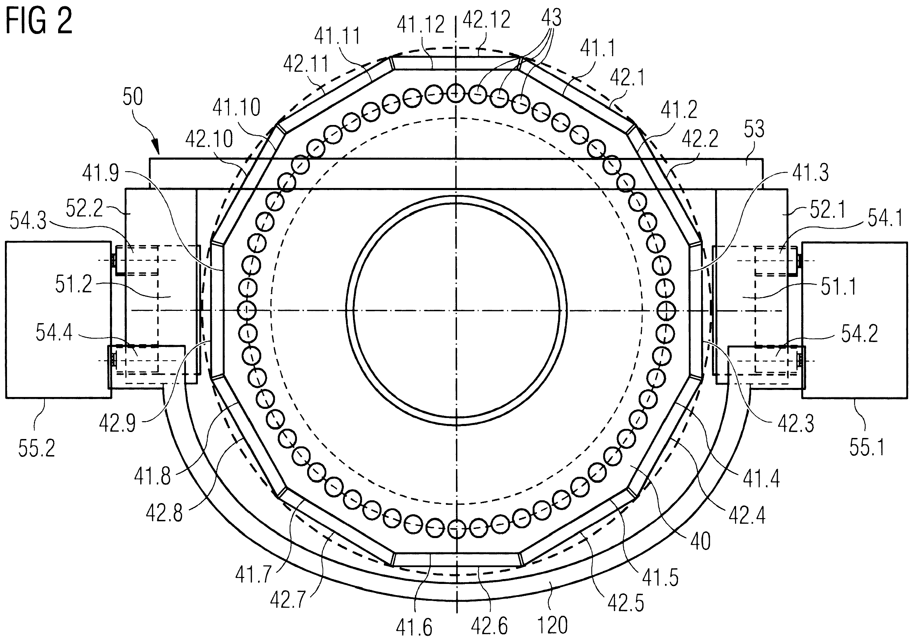

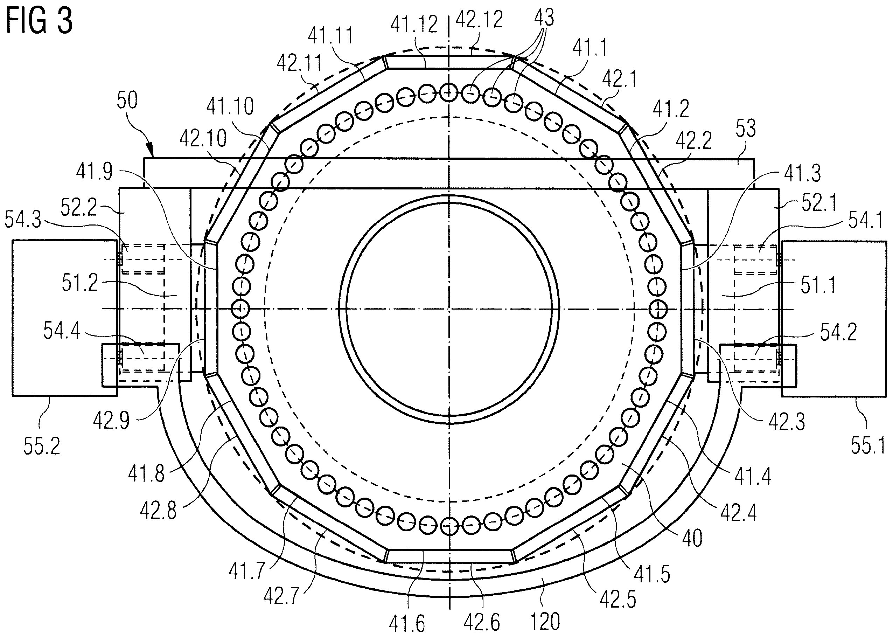

In the following, the operation of the locking system according to an embodiment of the invention will be explained with reference to Fig. 2 and 3. Fig. 2 and 3 are sectional views along a transversal plane of an embodiment of a locking system according to the invention. The transversal plane is indicated by line A-A in the Fig. 1.

In Fig. 2, the embodiment of the locking system according to the invention is shown with the main shaft 60 being unlocked, thereby allowing rotation of the main shaft 60. In this particular embodiment, the flange 40 is provided with twelve planar sides 41.1, 41.2, 41.3, 41.4, 41.5, 41.6, 41.7, 41.8, 41.9, 41.10, 41.11, 41.12 on its outer circumference. In this perspective, the flange 40 has the shape of a dodecagon. Each one of the planar sides 41.1, 41.2, 41.3, 41.4, 41.5, 41.6, 41.7, 41.8, 41.9, 41.10, 41.11, 41.12 has a parallel planar side 41.1, 41.2, 41.3, 41.4, 41.5, 41.6, 41.7, 41.8, 41.9, 41.10, 41.11, 41.12. The parallel planar sides 41.1, 41.2, 41.3, 41.4, 41.5, 41.6, 41.7, 41.8, 41.9, 41.10, 41.11, 41.12 are located opposite to each other. Clamping plates 42.1, 42.2, 42.3, 42.4, 42.5, 42.6, 42.7, 42.8, 42.9, 42.10, 42.11, 42.12 made from hardened material are reversibly attached to each one of the planar sides 41.1, 41.2, 41.3, 41.4, 41.5, 41.6, 41.7, 41.8, 41.9, 41.10, 41.11, 41.12 by means of screws, which are not depicted in this view.

A clamping device 50 is attached to the main frame 120. More particularly, clamping jaw housings 52.1, 52.2 of the clamping device 50, which are housing clamping jaws 51.1, 51.2, are attached to the main frame 120. The clamping jaw housings 52.1, 52.2 are connected to one another by means of a bridge 53. The bridge 53 is a beam in this particular embodiment. Each of the clamping jaws 51.1, 51.2 has a set of two pistons 54.1, 54.2 and 54.3, 54.4 attached to it. In this particular embodiment, the pistons 54.1, 54.2, 54.3, 54.4 are designed as screws screwed into bore holes of the clamping jaws 51.1, 51.2. In particular, the pistons 54.1, 54.2, 54.3, 54.4 are attached to the clamping jaws 51.1, 51.2 in upper and lower portions of the clamping jaws 51.1, 51.2. Each of the set of two pistons 54.1, 54.2 and 54.3, 54.4 is driven by a mechanical drive system 55.1, 55.2 attached to it.

The flange 40 is further provided with a set of through holes 43 for attachment to the hub 30. For example, a screw may be passed through each of the through holes 43 and screwed into respective threaded holes in the hub 30. The through holes 43 are arranged on an inner circumference of the flange 40. In this particular embodiment, there are sixty through holes 43 for attachment to the hub 30 arranged on the inner circumference of the flange 40.

In Fig. 2, the mechanical drive system 55.1, 55.2 has not been operated and the pistons 54.1, 54.2, 54.3, 54.4 and therefore the clamping jaws 51.1, 51.2 are in a retained position. In the retained position, the clamping jaws 51.1, 51.2 are largely or entirely retained in the clamping jaw housings 52.1, 52.2. In the retained position, none of the clamping plates 42.1, 42.2, 42.3, 42.4, 42.5, 42.6, 42.7, 42.8, 42.9, 42.10, 42.11, 42.12 is being contacted, in particular engaged, by the clamping jaws 51.1, 51.2.

In Fig. 3, the mechanical drive systems 55.1, 55.2 have been operated. Thereby, the pistons 54.1, 54.2, 54.3, 54.4 have been pushed out by the mechanical drive systems 55.1, 55.2 and the clamping jaws 51.1, 51.2 have been pushed out of the clamping jaw housings 52.1, 52.2 towards the flange 40. Typically, prior to operating the mechanical drive systems 55.1, 55.2, the brake 90 is applied to stop rotation of the hub 30 and thereby rotation of the main shaft 70 and the flange 40, so that the flange 40 can be securely locked in between the clamping jaws 51.1, 51.2. A control unit (not depicted) may be arranged in connection with the brake 90 to control the breaking procedure performed by the brake 90 so that the flange 40 is being stopped in a position, in which two of the planar side 41.1, 41.2, 41.3, 41.4, 41.5, 41.6, 41.7, 41.8, 41.9, 41.10, 41.11, 41.12 and more particularly two of the clamping plates 42.1, 42.2, 42.3, 42.4, 42.5, 42.6, 42.7, 42.8, 42.9, 42.10, 42.11, 42.12 are arranged parallel to contacting surfaces of the clamping jaws 51.1, 51.2 to enhance the locking procedure. The control unit may for this purpose comprise a detection device for detecting a position of the flange 40, such as a camera, for example. In a locked position, the clamping plates 42.3, 42.9 have been contacted, more particularly engaged, by the clamping jaws 51.1, 51.2. Thereby, the main shaft 70 attached to the flange 40 has been securely locked, because rotation of the flange 40 is locked by means of the clamping device 50.

## Claims

1. Locking system for locking the main shaft (70) of a wind turbine (10), the locking system comprising the main shaft (70) and a flange (40) arranged on the main shaft (70), whereby a hub end of the main shaft (70) is configured to connect to a hub (30) of the wind turbine (10), the hub (30) being configured to have at least two wind turbine blades (20) attached to the hub (30),
**characterized in**
**that** the flange (40) comprises at least two plane sides (41) arranged parallel to each other on an outer circumference of the flange (40) and the locking system further comprises a clamping device (50) having two clamping jaws (51), whereby the clamping jaws (51) are configured to clamp the flange (40) in between the clamping jaws (51) by contacting the two parallel plane sides (41) of the flange (40).

2. Locking system according to claim 1,
**characterized in**
**that** the flange (40) comprises at least twelve plane sides (41) arranged on the outer circumference of the flange (40), whereby each of the plane sides (41) has a corresponding parallel plane side (41).

3. Locking system according to claim 1 or 2,
**characterized in**
**that** at least one clamping plate (42) made from hardened material is attached to at least one of the plane sides (41) of the flange (40).

4. Locking system according to claim 3,
**characterized in**
**that** at least one of the at least one clamping plate (42) is reversibly attached to the at least one plane side (41) of the flange (40).

5. Locking system according to any of the previous claims, **characterized in**
**that** contacting surfaces of the clamping jaws (51), which are configured to contact the plane sides (41) of the flange (40), are provided with hardened material.

6. Locking system according to any of the previous claims, **characterized in**
**that** each of the clamping jaws (51) is driven by at least one piston (54), in particular by two pistons (54).

7. Locking system according to claim 6,
**characterized in**
**that** at least one of the pistons (54) is driven by a mechanical drive system (55).

8. Locking system according to any of the previous claims, **characterized in**
**that** each of the clamping jaws (51) is housed in a clamping jaw housing (52) and the clamping jaw housings (52) are connected to each other by means of a bridge (53).

9. Locking system according to any of the previous claims, **characterized in**
**that** the clamping device (50) is configured to be attached to a main frame (120) of the wind turbine (10).

10. Wind turbine (10) comprising a locking system according to any of the previous claims.

## Patentansprüche

1. Verriegelungssystem zum Verriegeln der Hauptwelle (70) einer Windturbine (10), wobei das Verriegelungssystem die Hauptwelle (70) und einen an der Hauptwelle (70) angeordneten Flansch (40) umfasst, wobei ein Nabenende der Hauptwelle (70) dazu ausgelegt ist, mit einer Nabe (30) der Windturbine (10) verbunden zu werden, wobei die Nabe (30) dazu ausgelegt ist, mindestens zwei an der Nabe (30) angebrachte Windturbinenblätter (20) aufzuweisen,
**dadurch gekennzeichnet,**
**dass** der Flansch (40) mindestens zwei ebene Seiten (41) umfasst, die parallel zueinander an einem Außenumfang des Flansches (40) angeordnet sind, und das Verriegelungssystem ferner eine Klemmvorrichtung (50) mit zwei Klemmbacken (51) umfasst, wobei die Klemmbacken (51) dazu ausgelegt sind, den Flansch (40) durch Kontaktieren der beiden parallelen ebenen Seiten (41) des Flansches (40)zwischen den Klemmbacken (51) einzuklemmen.

2. Verriegelungssystem gemäß Anspruch 1,
**dadurch gekennzeichnet,**
**dass** der Flansch (40) mindestens zwölf ebene Seiten (41) umfasst, die am Außenumfang des Flansches (40) angeordnet sind, wobei jede der ebenen Seiten (41) eine entsprechende parallele ebene Seite (41) aufweist.

3. Verriegelungssystem gemäß Anspruch 1 oder 2,
**dadurch gekennzeichnet,**
**dass** mindestens eine Klemmplatte (42) aus gehärtetem Material an mindestens einer der ebenen Seiten (41) des Flansches (40) angebracht ist.

4. Verriegelungssystem gemäß Anspruch 3,
**dadurch gekennzeichnet,**
**dass** mindestens eine der mindestens einen Klemmplatte (42) an der mindestens einen ebenen Seite (41) des Flansches (40) reversibel angebracht ist.

5. Verriegelungssystem gemäß einem der vorhergehenden Ansprüche,
**dadurch gekennzeichnet,**
**dass** die Kontaktflächen der Klemmbacken (51), die zum Kontakt mit den ebenen Seiten (41) des Flansches (40) ausgelegt sind, mit gehärtetem Material versehen sind.

6. Verriegelungssystem gemäß einem der vorhergehenden Ansprüche,
**dadurch gekennzeichnet,**
**dass** jede der Klemmbacken (51) durch mindestens einen Kolben (54), insbesondere durch zwei Kolben (54), angetrieben wird.

7. Verriegelungssystem gemäß Anspruch 6,
**dadurch gekennzeichnet,**
**dass** mindestens einer der Kolben (54) durch ein mechanisches Antriebssystem (55) angetrieben wird.

8. Verriegelungssystem gemäß einem der vorhergehenden Ansprüche,
**dadurch gekennzeichnet,**
**dass** jede der Klemmbacken (51) in einem Klemmbackengehäuse (52) untergebracht ist und die Klemmbackengehäuse (52) mittels einem Steg (53) miteinander verbunden sind.

9. Verriegelungssystem gemäß einem der vorhergehenden Ansprüche,
**dadurch gekennzeichnet,**
**dass** die Klemmvorrichtung (50) dazu ausgelegt ist, an einem Hauptrahmen (120) der Windturbine (10) angebracht zu werden.

10. Windturbine (10), umfassend ein Verriegelungssystem gemäß einem der vorhergehenden Ansprüche.

## Revendications

1. Système de verrouillage pour verrouiller l'arbre principal (70) d'une éolienne (10), le système de verrouillage comprenant l'arbre principal (70) et une bride (40) agencée sur l'arbre principal (70), une extrémité de moyeu de l'arbre principal (70) étant configurée pour se connecter à un moyeu (30) de l'éolienne (10), le moyeu (30) étant configuré pour avoir au moins deux pales d'éolienne (20) fixées au moyeu (30),
**caractérisé en**
**ce que** la bride (40) comprend au moins deux côtés plans (41) agencés parallèlement l'un à l'autre sur une circonférence extérieure de la bride (40) et le système de verrouillage comprend en outre un dispositif de serrage (50) ayant deux mâchoires de serrage (51), les mâchoires de serrage (51) étant configurées pour serrer la bride (40) entre les mâchoires de serrage (51) en venant en contact avec les deux côtés plans (41) parallèles de la bride (40).

2. Système de verrouillage selon la revendication 1,
**caractérisé en**
**ce que** la bride (40) comprend au moins douze côtés plans (41) agencés sur la circonférence extérieure de la bride (40), chacun des côtés plans (41) présentant un côté plan parallèle (41) correspondant.

3. Système de verrouillage selon la revendication 1 ou 2,
**caractérisé en**
**ce qu'**au moins une plaque de serrage (42) faite en matériau durci est fixée à au moins un des côtés plans (41) de la bride (40).

4. Système de verrouillage selon la revendication 3,
**caractérisé en**
**ce qu'**au moins l'une de la au moins une plaque de serrage (42) est fixée de manière réversible sur le au moins un côté plan (41) de la bride (40).

5. Système de verrouillage selon l'une quelconque des revendications précédentes,
**caractérisé en**
**ce que** les surfaces de contact des mâchoires de serrage (51), qui sont configurées pour venir en contact avec les côtés plans (41) de la bride (40), sont pourvues de matériau durci.

6. Système de verrouillage selon l'une quelconque des revendications précédentes,
**caractérisé en**
**ce que** chacune des mâchoires de serrage (51) est entraînée par au moins un piston (54), en particulier par deux pistons (54).

7. Système de verrouillage selon la revendication 6,
**caractérisé en**
**ce qu'**au moins un des pistons (54) est entraîné par un système d'entraînement mécanique (55).

8. Système de verrouillage selon l'une quelconque des revendications précédentes,
**caractérisé en**
**ce que** chacune des mâchoires de serrage (51) est logée dans un boîtier de mâchoires de serrage (52) et les boîtiers de mâchoires de serrage (52) sont reliés l'un à l'autre au moyen d'un pont (53).

9. Système de verrouillage selon l'une quelconque des revendications précédentes,
**caractérisé en**
**ce que** le dispositif de serrage (50) est configuré pour être fixé à un châssis principal (120) de l'éolienne (10).

10. Éolienne (10) comprenant un système de verrouillage selon l'une quelconque des revendications précédentes.
